(19)

**Europäisches Patentamt**
**European Patent Office**
**Office européen des brevets**

(11) **EP 4 577 596 B1**

(12) # EUROPEAN PATENT SPECIFICATION

(45) Date of publication and mention
of the grant of the patent:
**15.07.2026 Bulletin 2026/29**

(21) Application number: **23742319.9**

(22) Date of filing: **18.07.2023**

(51) International Patent Classification (IPC):
**C08J 5/04** (2006.01)  **D06M 13/282** (2006.01)
**C08J 5/08** (2006.01)

(52) Cooperative Patent Classification (CPC):
**C08J 5/043; B29B 7/726; B29B 9/06; B29B 9/14;**
**B29B 9/16; C03C 25/50; C08J 5/08;** B29B 7/38;
C08J 2323/08; C08J 2323/12; C08J 2323/26

(86) International application number:
**PCT/EP2023/069904**

(87) International publication number:
**WO 2024/041814 (29.02.2024 Gazette 2024/09)**

(54) **GLASS FIBER-REINFORCED THERMOPLASTIC POLYMER COMPOSITION**

GLASFASERVERSTÄRKTE THERMOPLASTISCHE POLYMERZUSAMMENSETZUNG

COMPOSITION DE POLYMÈRE THERMOPLASTIQUE RENFORCÉE PAR DES FIBRES DE VERRE

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **25.08.2022 PCT/CN2022/114737**
**27.09.2022 EP 22198055**

(43) Date of publication of application:
**02.07.2025 Bulletin 2025/27**

(73) Proprietor: **SABIC Global Technologies B.V.**
**4612 PX Bergen op Zoom (NL)**

(72) Inventors:
• **WEN, Liang**
**6160 GA Geleen (NL)**
• **DONNERS, Rob**
**6160 GA Geleen (NL)**

• **SYED, Tariq**
**6160 GA Geleen (NL)**
• **LIU, Xiqiang**
**6160 GA Geleen (NL)**
• **QI, Pengting**
**6160 GA Geleen (NL)**
• **JIANG, Chaodong**
**6160 GA Geleen (NL)**

(74) Representative: **Sabic Intellectual Property Group**
**Sabic Intellectual Property Department**
**P.O. Box 3008**
**6160 GA Geleen (NL)**

(56) References cited:
**WO-A1-2009/080281**    **US-A1- 2015 315 365**
**US-B1- 6 291 064**

**Description**

The present invention relates to a glass fiber-reinforced thermoplastic polymer composition and a process for producing such composition.

A glass fiber-reinforced thermoplastic polymer composition can be made by a process comprising subsequent steps of unwinding from a package of a continuous glass multifilament strand and applying a sheath of polypropylene around said multifilament strand to form a sheathed continuous multifilament strand.

Such process is known from International application WO 2009/080281. This published patent application discloses a process for producing a long glass fiber-reinforced thermoplastic polymer composition, which comprises the subsequent steps of i) unwinding from a package of at least one continuous glass multifilament strand, ii) applying an impregnating agent to said at least one continuous glass multifilament strand to form an impregnated continuous multifilament strand, and iii) applying a sheath of thermoplastic polymer around the impregnated continuous multifilament strand to form a sheathed continuous multifilament strand.

It is desirable that a moulded article made from a glass fiber-reinforced thermoplastic polymer composition has good mechanical properties such as tensile properties. It is also desirable that the article emits less volatile compounds. Good visual appearance is also desirable such as an appearance with less white spots. White spots may occur due to an insufficient dispersion of the fibers in the article.

It is an objective of the present invention to provide a glass fiber-reinforced thermoplastic polymer composition in which the above-mentioned and/or other needs are met.

Accordingly, the invention provides a glass fiber-reinforced thermoplastic polymer composition comprising a sheathed continuous multifilament strand comprising a core that extends in the longitudinal direction and a polymer sheath which intimately surrounds said core,

> wherein the core comprises an impregnated continuous multifilament strand comprising at least one continuous glass multifilament strand, wherein the at least one continuous glass multifilament strand is impregnated with an impregnating agent,
> wherein the polymer sheath consists of a thermoplastic polymer composition comprising a thermoplastic polymer,
> wherein the impregnating agent comprises at least one of an aromatic phosphate ester, polyphosphonate, poly(phosphonate-co-carbonate).

The invention further provides a process for the production of the glass fiber-reinforced thermoplastic polymer composition according to the invention, wherein the sheathed continuous multifilament strand is prepared by the sequential steps of

> a) unwinding from a package of the at least one continuous glass multifilament strand,
> b) applying the impregnating agent to the at least one continuous glass multifilament strand to form the impregnated continuous multifilament strand and
> c) applying the sheath of the thermoplastic polymer composition around the impregnated continuous multifilament strand to form the sheathed continuous multifilament strand.

Details relevant to steps a)-c) are described in WO2009/080281A1.

The process for the production of the glass fiber-reinforced thermoplastic polymer composition according to the invention may further comprise the step of

d) cutting the sheathed continuous glass multifilament strand into pellets.

It was surprisingly found that a moulded article made from the glass fiber-reinforced thermoplastic polymer composition according to the invention has good tensile properties as well as emit less volatile compounds.

<u>Sheathed continuous multifilament strand</u>

The glass fiber-reinforced thermoplastic polymer composition according to the invention, which may be in the form of pellets, comprises or consists of the sheathed continuous multifilament strand. The sheathed continuous multifilament strand comprises or consists of a core and a polymer sheath. The core has a generally cylindrical shape and comprises an impregnated continuous multifilament strand comprising glass filaments. The core is intimately surrounded around its circumference by a polymer sheath having a generally tubular shape and consisting of a thermoplastic polymer composition. The glass filaments have a length substantially equal to the axial length of the pellet.

The core does not substantially contain the material of the sheath. The sheath is substantially free of the glass filaments. Such a pellet structure is obtainable by a wire-coating process such as for example disclosed in WO 2009/080281 and is distinct from the pellet structure that is obtained via the typical pultrusion type of processes such as disclosed in US 6,291,064.

Preferably, the polymer sheath is substantially free of the glass filaments, meaning it comprises less than 2 wt% of the glass filaments based on the total weight of the polymer sheath.

Preferably, the radius of the core is between 800 and 4000 micrometer and/or the thickness of the polymer sheath is between 500 and 1500 micrometer.

Preferably, the core comprises between 35 and 60 % of the cross section area of the pellet and the sheath comprises between 40 and 65 % of the cross section area of the pellet.

Preferably, the amount of the impregnated continuous multifilament strand is 10 to 70 wt%, for example 15 to 60 wt%, 20 to 50 wt% or 25 to 45 wt%, with respect to the sheathed continuous multifilament strand. Preferably, the amount of the thermoplastic composition is 30 to 90 wt%, for example 40 to 85 wt%, 50 to 80 wt% or 55 to 75 wt%, with respect to the sheathed continuous multifilament strand. Preferably, the total amount of the impregnated continuous multifilament strand and the thermoplastic composition is 100 wt% with respect to the sheathed continuous multifilament strand.

Polymer sheath

The sheath intimately surrounds the core. The term intimately surrounding as used herein is to be understood as meaning that the polymer sheath substantially entirely contacts the core. Said in another way the sheath is applied in such a manner onto the core that there is no deliberate gap between an inner surface of the sheath and the core containing the impregnated continuous multifilament strands. A skilled person will nevertheless understand that a certain small gap between the polymer sheath and the core may be formed as a result of process variations.

The polymer sheath consists of a thermoplastic polymer composition.

Thermoplastic polymer composition of polymer sheath

The thermoplastic polymer composition comprises a thermoplastic polymer. Preferably, the thermoplastic polymer composition consists of the thermoplastic polymer and additives described below.

Thermoplastic polymer in thermoplastic polymer composition of polymer sheath

The amount of the thermoplastic polymer with respect to the thermoplastic polymer composition may be at least 50 wt%, for example 50 to 99.9 wt%, 75 to 99.9 wt% or 95 to 99 wt%.

Suitable examples of thermoplastic polymers include but are not limited to polyamide, such as polyamide 6, polyamide, 66 or polyamide 46; polyolefins, for example polypropylenes and polyethylenes; polyesters, such as polyethylene terephthalate, polybutylene terephthalate; polycarbonates; polyphenylene sulphide; polyurethanes and and mixtures thereof.

The thermoplastic polymer is preferably a polyolefin, more preferably a polyolefin chosen from the group of polypropylenes or elastomers of ethylene and $\alpha$-olefin comonomer having 4 to 8 carbon atoms, and any mixtures thereof.

In one embodiment, preferably the thermoplastic polymer composition comprises at least 80wt% of the thermoplastic polymer, for example at least 90wt%, at least 93wt%, at least 95wt%, at least 97wt% at least 98wt% or at least 99wt% of the thermoplastic polymer based on the thermoplastic polymer composition. In a special embodiment, the thermoplastic polymer composition consists of the thermoplastic polymer. In another embodiment, the thermoplastic polymer composition comprises at least 60wt%, for example at least 70wt%, for example at least 75wt% and/or at most 99wt%, for example at most 95wt%, for example at most 90wt% of the thermoplastic polymer.

Preferably, the thermoplastic polymer has a melt flow index in the range from 20 to 150 dg/min, for example in the range from 30 to 140 dg/min as measured according to ISO1133-1:2011 (2.16kg/230°C). Preferably, the thermoplastic polymer has a melt flow index in the range from 50 to 130 dg/min as measured according to ISO1133-1:2011 (2.16kg/230°C).

The polypropylene may for example be a propylene homopolymer or a random propylene copolymer or a heterophasic propylene copolymer.

A propylene homopolymer can be obtained by polymerizing propylene under suitable polymerization conditions. A propylene copolymer can be obtained by copolymerizing propylene and one or more other $\alpha$-olefins, preferably ethylene, under suitable polymerization conditions. The preparation of propylene homopolymers and copolymers is, for example, described in Moore, E. P. (1996) Polypropylene Handbook. Polymerization, Characterization, Properties, Processing, Applications, Hanser Publishers: New York.

The random propylene copolymer may comprise as the comonomer ethylene or an $\alpha$-olefin chosen from the group of $\alpha$-olefins having 4 to 10 C-atoms, preferably ethylene, 1-butene, 1-hexene or any mixtures thereof. The amount of the comonomer is preferably at most 10wt% based on the random propylene copolymer, for example in the range from 2-7wt% based on the random propylene copolymer.

Polypropylenes can be made by any known polymerization technique as well as with any known polymerization catalyst system. Regarding the techniques, reference can be given to slurry, solution or gas phase polymerizations; regarding the catalyst system reference can be given to Ziegler-Natta, metallocene or single-site catalyst systems. All are, in themselves, known in the art.

Heterophasic propylene copolymers are generally prepared in one or more reactors, by polymerization of propylene in the presence of a catalyst and subsequent polymerization of an ethylene-$\alpha$-olefin mixture. The resulting polymeric materials are heterophasic, but the specific morphology usually depends on the preparation method and monomer ratios used.

The heterophasic propylene copolymers can be produced using any conventional technique known to the skilled person, for example multistage process polymerization, such as bulk polymerization, gas phase polymerization, slurry polymerization, solution polymerization or any combinations thereof. Any conventional catalyst systems, for example, Ziegler-Natta or metallocene may be used. Such techniques and catalysts are described, for example, in WO06/010414; Polypropylene and other Polyolefins, by Ser van der Ven, Studies in Polymer Science 7, Elsevier 1990; WO06/010414, US4399054 and US4472524.

Preferably, the heterophasic propylene copolymer is made using Ziegler-Natta catalyst.

The heterophasic propylene copolymer may be prepared by a process comprising

- polymerizing propylene and optionally ethylene and/or $\alpha$-olefin in the presence of a catalyst system to obtain the propylene-based matrix and
- subsequently polymerizing ethylene and $\alpha$-olefin in the propylene-based matrix in the presence of a catalyst system to obtain the dispersed ethylene-a olefin copolymer. These steps are preferably performed in different reactors. The catalyst systems for the first step and for the second step may be different or same.

The heterophasic propylene copolymer of the composition of the invention consists of a propylene-based matrix and a dispersed ethylene-$\alpha$-olefin copolymer. The propylene-based matrix typically forms the continuous phase in the heterophasic propylene copolymer. The amounts of the propylene-based matrix and the dispersed ethylene-$\alpha$-olefin copolymer may be determined by $^{13}$C-NMR, as well known in the art.

The propylene-based matrix consists of a propylene homopolymer and/or a propylene copolymer consisting of at least 70 wt% of propylene monomer units and at most 30 wt% of comonomer units selected from ethylene monomer units and $\alpha$-olefin monomer units having 4 to 10 carbon atoms, for example consisting of at least 80 wt% of propylene monomer units and at most 20 wt% of the comonomer units, at least 90 wt% of propylene monomer units and at most 10 wt% of the comonomer units or at least 95 wt% of propylene monomer units and at most 5 wt% of the comonomer units, based on the total weight of the propylene-based matrix.

Preferably, the comonomer in the propylene copolymer of the propylene-based matrix is selected from the group of ethylene, 1-butene, 1-pentene, 4-methyl-1-pentene, 1-hexen, 1-heptene and 1-octene, and is preferably ethylene.

Preferably, the propylene-based matrix consists of a propylene homopolymer.

The melt flow index (MFI) of the propylene-based matrix (before the heterophasic propylene copolymer is mixed into the composition of the invention), $MFI_{PP}$, may be for example at least 0.1 dg/min, at least 0.2 dg/min, at least 0.3 dg/min, at least 0.5 dg/min, at least 1 dg/min, at least 1.5 dg/min, and/or for example at most 50 dg/min, at most 40 dg/min, at most 30 dg/min, at most 25 dg/min, at most 20 dg/min, measured according to ISO1133 (2.16 kg/230°C). The $MFI_{PP}$ may be in the range of for example 0.1 to 50 dg/min, for example from 0.2 to 40 dg/min, for example 0.3 to 30 dg/min, for example 0.5 to 25 dg/min, for example from 1 to 20 dg/min, for example from 1.5 to 10 dg/min, measured according to ISO1133 (2.16 kg/230°C).

The propylene-based matrix may e.g. be present in an amount of 50 to 95wt%. Preferably, the propylene-based matrix is present in an amount of 60 to 85wt%, for example at least 65 wt% or at least 70 wt% and/or at most 78 wt%, based on the total heterophasic propylene copolymer.

The propylene-based matrix is preferably semi-crystalline, that is it is not 100% amorphous, nor is it 100% crystalline. For example, the propylene-based matrix is at least 40% crystalline, for example at least 50%, for example at least 60% crystalline and/or for example at most 80% crystalline, for example at most 70% crystalline. For example, the propylene-based matrix has a crystallinity of 60 to 70%. For purpose of the invention, the degree of crystallinity of the propylene-based matrix is measured using differential scanning calorimetry (DSC) according to ISO11357-1 and ISO11357-3 of 1997, using a scan rate of 10°C/min, a sample of 5mg and the second heating curve using as a theoretical standard for a 100% crystalline material 207.1 J/g.

Besides the propylene-based matrix, the heterophasic propylene copolymer also comprises a dispersed ethylene-$\alpha$-olefin copolymer. The dispersed ethylene-$\alpha$-olefin copolymer is also referred to herein as the 'dispersed phase'. The dispersed phase is embedded in the heterophasic propylene copolymer in a discontinuous form. The particle size of the dispersed phase is typically in the range of 0.05 to 2.0 microns, as may be determined by transmission electron microscopy (TEM). The amount of the dispersed ethylene-$\alpha$-olefin copolymer in the heterophasic propylene copolymer may herein be sometimes referred as RC.

The amount of ethylene monomer units in the ethylene-α-olefin copolymer may e.g. be 20 to 65 wt%. The amount of ethylene monomer units in the dispersed ethylene-α-olefin copolymer in the heterophasic propylene copolymer may herein be sometimes referred as RCC2.

The α-olefin in the ethylene-α-olefin copolymer is preferably chosen from the group of α-olefins having 3 to 8 carbon atoms. Examples of suitable α-olefins having 3 to 8 carbon atoms include but are not limited to propylene, 1-butene, 1-pentene, 4-methyl-1-pentene, 1-hexen, 1-heptene and 1-octene. More preferably, the α-olefin in the ethylene-α-olefin copolymer is chosen from the group of α-olefins having 3 to 4 carbon atoms and any mixture thereof, more preferably the α-olefin is propylene, in which case the ethylene-α-olefin copolymer is ethylene-propylene copolymer.

The MFI of the dispersed ethylene α-olefin copolymer (before the heterophasic propylene copolymer is mixed into the composition of the invention), MFIrubber, may be for example at least 0.001 dg/min, at least 0.01 dg/min, at least 0.1 dg/min, at least 0.3 dg/min, at least 0.7 dg/min, at least 1 dg/min, and/or for example at most 30 dg/min, at most 20 dg/min, at most 15 dg/min at most 10 dg/min, at most 5 dg/min or at most 3 dg/min. The MFIrubber may be in the range for example from 0.001 to 30 dg/min, for example from 0.01 to 20 dg/min, for example 0.1 to 15 dg/min, for example 0.3 to 10 dg/min, for example from 0.7 to 5 dg/min, for example from 1 to 3 dg/min. MFIrubber is calculated according to the following formula:

$$MFIrubber = 10^{\wedge}(\frac{Log\ MFIheterophasic - matrix\ content * Log\ MFImatrix}{rubber\ content})$$

wherein

MFIheterophasic is the MFI (dg/min) of the heterophasic propylene copolymer measured according to ISO1133 (2.16kg/230°C),
MFImatrix is the MFI (dg/min) of the propylene-based matrix measured according to ISO1133 (2.16kg/230°C),
matrix content is the fraction of the propylene-based matrix in the heterophasic propylene copolymer,
rubber content is the fraction of the dispersed ethylene-α-olefin copolymer in the heterophasic propylene copolymer. The sum of the matrix content and the rubber content is 1. For the avoidance of any doubt, Log in the formula means $\log_{10}$.

The dispersed ethylene-α-olefin copolymer is present in an amount of 50 to 5 wt% based on the total heterophasic propylene copolymer. Preferably, the dispersed ethylene-α-olefin copolymer is present in an amount of 40 to 15 wt%, for example in an amount of at least 22 wt% and/or for example in an amount of at most 35 wt% or at most 30 wt% based on the total heterophasic propylene copolymer.

In the heterophasic propylene copolymer in the composition of the invention, the sum of the total weight of the propylene-based matrix and the total weight of the dispersed ethylene-α-olefin copolymer is 100 wt% of the heterophasic propylene copolymer.

The α-olefin in the ethylene-α-olefin copolymer is preferably chosen from the group of α-olefins having 3 to 8 carbon atoms and any mixtures thereof, preferably the α-olefin in the ethylene-α-olefin copolymer is chosen from the group of α-olefins having 3 to 4 carbon atoms and any mixture thereof, more preferably the α-olefin is propylene, in which case the ethylene-α-olefin copolymer is ethylene-propylene copolymer. Examples of suitable α-olefins having 3 to 8 carbon atoms, which may be employed as ethylene comonomers to form the ethylene α-olefin copolymer include but are not limited to propylene, 1-butene, 1-pentene, 4-methyl-1-pentene, 1-hexen, 1-heptene and 1-octene.

The elastomer of ethylene and α-olefin comonomer having 4 to 8 carbon atoms may for example have a density in the range from 0.850 to 0.915 g/cm³. Such elastomers are sometimes also referred to as plastomers.

The α-olefin comonomer in the elastomer is preferably an acyclic monoolefin such as 1-butene, 1-pentene, 1-hexene, 1-octene, or 4-methylpentene.

Accordingly, the elastomer is preferably selected from the group consisting of ethylene-1-butene copolymer , ethylene-1-hexene copolymer, ethylene-1-octene copolymer and mixtures thereof, more preferably wherein the elastomer is selected from ethylene-1-octene copolymer. Most preferably, the elastomer is an ethylene-1-octene copolymer.

Preferably, the density of the elastomer is at least 0.865 g/cm³ and/or at most 0.910 g/cm³. For example, the density of the elastomer is at least 0.850, for example at least 0.865, for example at least 0.88, for example at least 0.90 and/or for example at most 0.915, for example at most 0.910, for example at most 0.907, for example at most 0.906 g/cm³. More preferable the density of the elastomer is in the range from 0.88 up to an including 0.907 g/cm³, most preferably, the density of the elastomer is in the range from 0.90 up to and including 0.906 g/cm³.

Elastomers which are suitable for use in the current invention are commercially available for example under the trademark EXACT™ available from Exxon Chemical Company of Houston, Texas or under the trademark ENGAGE™

polymers, a line of metallocene catalyzed plastomers available from Dow Chemical Company of Midland, Michigan or under the trademark TAFMER™ available from MITSUI Chemicals Group of Minato Tokyo or under the trademark Nexlene™ from SK Chemicals.

The elastomers may be prepared using methods known in the art, for example by using a single site catalyst, i.e., a catalyst the transition metal components of which is an organometallic compound and at least one ligand of which has a cyclopentadienyl anion structure through which such ligand bondingly coordinates to the transition metal cation. This type of catalyst is also known as "metallocene" catalyst. Metallocene catalysts are for example described in U.S. Patent Nos. 5,017,714 and 5,324,820. The elastomer s may also be prepared using traditional types of heterogeneous multi-sited Ziegler-Natta catalysts.

Preferably, the elastomer has a melt flow index of 0.1 to 40 dg/min (ISO1133, 2.16kg, 190°C), for example at least 1 dg/min and/or at most 35 dg/min. More preferably, the elastomer has a melt flow index of at least 1.5 dg/min, for example of at least 2 dg/min, for example of at least 2.5 dg/min, for example of at least 3 dg/min, more preferably at least 5 dg/min and/or preferably at most 30 dg/min, more preferably at most 20 dg/min, more preferably at most 10 dg/min measured in accordance with ISO 1133 using a 2.16 kg weight and at a temperature of 190 °C.

Preferably, the amount of ethylene incorporated into the elastomer is at least 50 mol %. More preferably, the amount of ethylene incorporated into the elastomer is at least 57 mol%, for example at least 60 mol %, at least 65 mol% or at least 70 mol%. Even more preferably, the amount of ethylene incorporated into the elastomer is at least 75 mol%. The amount of ethylene incorporated into the elastomer may typically be at most 97.5 mol%, for example at most 95 mol% or at most 90 mol%.

In some preferred embodiments, the thermoplastic polymer in the thermoplastic polymer composition is a mixture of a propylene homopolymer and a heterophasic propylene copolymer.

Additives in thermoplastic polymer composition of polymer sheath

The thermoplastic polymer composition of the polymer sheath may contain other usual additives, for instance nucleating agents and clarifiers, stabilizers, fillers, plasticizers, anti-oxidants, lubricants, antistatics, scratch resistance agents, impact modifiers, acid scavengers, recycling additives, coupling agents, anti-microbials, anti-fogging additives, slip additives, anti-blocking additives, polymer processing aids, flame retardants, colorants and the like. Such additives are well known in the art. The skilled person will know how to choose the type and amount of additives such that they do not detrimentally influence the aimed properties. The amount of the additives may e.g. be 0.1 to 50 wt% of the thermoplastic polymer composition, for example 0.1 to 25 wt% or 1.0 to 5.0 wt%.

In some preferred embodiments, the additives in the thermoplastic polymer composition of the polymer sheath comprises a coupling agent.

Suitable examples of the coupling agent include a functionalized polyolefin grafted with an acid or acid anhydride functional group. The polyolefin is preferably polyethylene or polypropylene, more preferably polypropylene. The polypropylene may be a propylene homopolymer or a propylene copolymer. The propylene copolymer may be a propylene- $\alpha$-olefin copolymer consisting of at least 70 wt% of propylene and up to 30 wt% of $\alpha$-olefin, for example ethylene, for example consisting of at least 80 wt% of propylene and up to 20 wt% of $\alpha$-olefin, for example consisting of at least 90 wt% of propylene and up to 10 wt% of $\alpha$-olefin, based on the total weight of the propylene-based matrix. Preferably, the $\alpha$-olefin in the propylene- $\alpha$-olefin copolymer is selected from the group of $\alpha$-olefins having 2 or 4-10 carbon atoms and is preferably ethylene. Examples of the acid or acid anhydride functional groups include (meth)acrylic acid and maleic anhydride. A particularly suitable material is for example maleic acid functionalized propylene homopolymer (for example Exxelor PO 1020 supplied by Exxon).

The amount of the coupling agent may e.g. be 0.5 to 3.0 wt%, preferably 1.0 to 2.0 wt%, based on the sheathed continuous multifilament strand.

Core

The sheathed continuous multifilament strand comprises a core that extends in the longitudinal direction. The core comprises an impregnated continuous multifilament strand comprising at least one continuous glass multifilament strand, wherein the at least one continuous glass multifilament strand is impregnated with an impregnating agent. The impregnated continuous multifilament strand is prepared from a continuous glass multifilament strand and an impregnating agent.

Preferably, the at least one impregnated continuous multifilament strands form at least 90wt%, more preferably at least 93wt%, even more preferably at least 95wt%, even more preferably at least 97wt%, even more preferably at least 98wt%, for example at least 99wt% of the core. In a preferred embodiment, the core consists of the at least one impregnated continuous multifilament strand.

In the context of the invention with 'extends in the longitudinal direction' is meant 'oriented in the direction of the long axis of the sheathed continuous multifilament strand'.

Glass filaments of sheathed continuous multifilament strand of core

The continuous multifilament strand comprises glass filaments. Glass fibres are generally supplied as a plurality of continuous, very long filaments, and can be in the form of strands, rovings or yarns. A filament is an individual fibre of reinforcing material. A strand is a plurality of bundled filaments. Yarns are collections of strands, for example strands twisted together. A roving refers to a collection of strands wound into a package.

For purpose of the invention, a glass multifilament strand is defined as a plurality of bundled glass filaments.

Glass multifilament strands and their preparation are known in the art.

The filament density of the continuous glass multifilament strand may vary within wide limits. For example, the continuous glass multifilament strand may have a density of 1000 to 10000 grams per 1000 meter.

Preferably, the continuous glass multifilament strand has a density of 1000 to 2900 grams per 1000 meter, more preferably 1500 to 2800 grams per 1000 meter.

The continuous glass multifilament strand may have a filament diameter of 5 to 50 $\mu$m, more preferably from 10 to 30 $\mu$m, even more preferably from 15 to 25 $\mu$m. Usually the glass filaments are circular in cross section meaning the thickness as defined above would mean diameter. The glass filaments are generally circular in cross section.

Preferably, the ratio between the length of the glass fibers and the diameter of the glass fibers (L/D ratio) in the pellets is 500 to 1000.

The length of the glass filaments is in principle not limited as it is substantially equal to the length of the sheathed continuous multifilament strand. For practical reasons of being able to handle the strand however, it may be necessary to cut the sheathed continuous multifilament strand into a shorter strand. For example the length of the sheathed continuous multifilament strand is at least 1 m, for example at least 10 m, for example at least 50 m, for example at least 100m, for example at least 250 m, for example at least 500m and/or for example at most 25 km, for example at most 10km.

Preferably, the glass multifilament strand is coated with a sizing composition (i.e., a coating) to improve adhesion to the polymer matrix. The sizing composition can be disposed on substantially all of the glass filaments or on a portion of the glass filaments in the thermoplastic composition. The sizing provides coated glass filaments that can be either bonding or non-bonding towards the thermoplastic polymer composition of the sheath. Preferably, the coated glass filaments are bonding towards the polyester in the thermoplastic polymer composition of the sheath.

The sizing composition can include a polyepoxide, a poly(meth)acrylate, a poly(arylene ether), a polyurethane, or a combination thereof. The polyepoxide can be a phenolic epoxy resin, an epoxylated carboxylic acid derivative (e.g., a reaction product of an ester of a polycarboxylic acid having one or more unesterified carboxyl groups with a compound including more than one epoxy group), an epoxidized diene polymer, an epoxidized polyene polymer, or a combination thereof.

The sizing composition can further include a silane coupling agent to facilitate bonding with the glass fiber. The silane coupling agent can be tri($C_{1-6}$ alkoxy)mono amino silane, tri($C_{1-6}$ alkoxy)diamino silane, tri($C_{1-6}$ alkoxy)($C_{1-6}$ alkyl ureido) silane, tri($C_{1-6}$ alkoxy)(epoxy $C_{1-6}$ alkyl) silane, tri($C_{1-6}$ alkoxy)(glycidoxy $C_{1-6}$ alkyl) silane, tri($C_{1-6}$ alkoxy)(mercapto $C_{1-6}$ alkyl) silane, or a combination thereof. For example, the silane coupling agent is (3 -aminopropyl)triethoxy silane, (3-glycidoxypropyl)trimethoxysilane, (2-(3,4- epoxycyclohexyl)ethyl)triethoxysilane, (3-mercaptopropyl)trimethoxysilane, (3-(2- aminoethylamino)propyl)triethoxysilane, (3 -ureidopropyl)triethoxy silane, or a combination thereof. Preferably, the silane coupling agent is aminopropyltriethoxysilane, glycidylpropyltrimethoxysilane, or a combination thereof.

Other materials that can be included in the sizing composition include, but are not limited to, anti-static agents, coupling agents, lubricants, wetting agents, or the like.

The sizing composition can be present in an amount from 0.1 to 5 wt% based on the weight of the at least one continuous glass multifilament strand. The sizing composition may be applied to the glass fibers by any means, such as immersing the glass multifilament strand in the sizing composition or contacting the glass multifilament strand with an aqueous emulsion, or suspension of the sizing composition. Other coating methods include using an aqueous dispersion of the sizing composition applied to the uncoated glass multifilament strand by a roller in a continuous fashion, which can be followed by a heat treatment or curing step.

Typically, after applying the sizing composition to the glass filaments, the filaments are bundled into the continuous glass multifilament strands and then wound onto bobbins to form a package.

Preferably, the amount of the at least one continuous glass multifilament strand is 10 to 70 wt%, for example 15 to 60 wt%, 20 to 50 wt% or 25 to 45 wt%, with respect to the sheathed continuous multifilament strand.

Impregnating agent

The impregnated continuous multifilament strand is prepared from a continuous glass multifilament strand and an impregnating agent and in particular by applying an impregnating agent to the continuous glass multifilament strand preferably in an amount from 0.50 to 18.0 wt% with respect to the sheathed continuous multifilament strand.

According to the invention, the impregnating agent comprises at least one of an aromatic phosphate ester, polyphosphonate, poly(phosphonate-co-carbonate).

Preferably, the impregnating agent comprises an aromatic phosphate ester.

Preferably, the aromatic phosphate ester is selected from the group consisting of resorcinol bis(diphenyl phosphate);

> tetraphenyl resorcinol bis(diphenylphosphate);
> bisphenol A bis(diphenyl phosphate);
> bisphenol A diphosphate;
> resorcinol bis(di-2,6-xylyl phosphate),
> phosphoric acid, mixed esters with [1,1'-biphenyl]-4-4'-diol and phenol;
> phosphorictrichloride, polymer with 1,3-benzenediol, phenylester;
> 1,3-phenylene-tetrakis(2,6-dimethylphenyl)diphosphate;
> isopropenylphenyl diphenyl phosphate;
> 4-phenylphenolformaldehyde phenylphosphonate;
> tris(2,6-xylyl) phosphate;
> resorcinol bis(di-2,6-xylyl phosphate);
> bisphenol S bis(diphenyl phosphate); and
> resorcinol-bisphenol A phenyl phosphates and
> combinations thereof.

Most preferably, the aromatic phosphate ester is bisphenol A bis(diphenyl phosphate).

Preferably, the amount of the impregnating agent with respect to the sheathed continuous multifilament strand is 1.0 to 10.0 wt%, more preferably 1.5 to 5.0 wt%, more preferably 2.5 to 5.0 wt%.

Preferably, the amount of or the aromatic phosphate ester with respect to the sheathed continuous multifilament strand is 1.0 to 10.0 wt%, more preferably 1.5 to 5.0 wt%, more preferably 2.5 to 5.0 wt%. This results in a particularly low number of white spots.

For example, the weight ratio of impregnating agent or the aromatic phosphate ester to continuous glass multifilament strand is in the range from 1:4 to 1:30, preferably in the range from 1:5 to 1:20, more preferably 1:6 to 1:13.

The impregnating agent may further comprise other types of compounds. Preferably, the total amount of the aromatic phosphate ester, polyphosphonate, poly(phosphonate-co-carbonate) with respect to the impregnating agent is at least 80 wt%, for example at least 90wt%, at least 93wt%, at least 95wt%, at least 97wt% at least 98wt% or at least 99wt%.

Preferably, the total amount of the aromatic phosphate ester with respect to the impregnating agent is at least 80 wt%, for example at least 90wt%, at least 93wt%, at least 95wt%, at least 97wt% at least 98wt% or at least 99wt%. In some embodiments, the impregnating agent consists of the aromatic phosphate ester.

The impregnating agent may contain microcrystalline wax, for example those described in detail in e.g. WO2015/062825, p5, I.17 - p.7, I.9, incorporated herein by reference.. In that respect it is to be understood that the microcrystalline wax may be a single microcrystalline wax or a blend of several microcrystalline waxes.

Any method known in the art may be used for applying the liquid impregnating agent to the continuous glass multifilament strand. The application of the liquid impregnating agent may be performed using a die. Other suitable methods for applying the impregnating agent to the continuous multifilament strands include applicators having belts, rollers, and hot melt applicators. Such methods are for example described in documents EP0921919B1, EP0994978B1, EP0397505B1, WO2014/053590A1 and references cited therein. The method used should enable application of a constant amount of impregnating agent to the continuous multifilament strand.

Preferably, the amount of the impregnated continuous multifilament strand is 15 to 75 wt%, for example 20 to 65 wt%, 25 to 55 wt% or 30 to 50 wt%, with respect to the sheathed continuous multifilament strand. Preferably, the total amount of the impregnated continuous multifilament strand and the polymer sheath is 100wt% with respect to the sheathed continuous multifilament strand.

Further aspects

The invention provides pellets comprising or consisting of the glass fiber-reinforced thermoplastic polymer composition according to the invention.

The pellets may typically have a length of from 2 to 50 mm, preferably from 5 to 30 mm, more preferably from 6 to 20 and most preferably from 10 to 16 mm. The length of the glass fibers is typically substantially the same as the length of the pellet.

The total amount of the thermoplastic polymer composition and the impregnated continuous multifilament strand in the pellet is preferably at least 95 wt%, at least 98 wt%, at least 99 wt%, at least 99.9 wt% or 100 wt% with respect to the pellet.

The pellets according to the invention are preferably prepared by a process comprising the sequential steps of

a) unwinding from a package of the at least one continuous glass multifilament strand,
b) applying the impregnating agent to the at least one continuous glass multifilament strand to form the impregnated continuous multifilament strand and
c) applying the sheath of the thermoplastic polymer composition around the impregnated continuous multifilament strand to form the sheathed continuous multifilament strand and
d) cutting the sheathed continuous glass multifilament strand into pellets.

Step d) may be followed by a step of moulding the pellets into (semi-)finished articles. Suitable examples of moulding processes include injection moulding, compression moulding, extrusion and extrusion compression moulding. Injection moulding is widely used to produce articles such as automotive exterior parts like bumpers and tailgates, automotive interior parts like instrument panels, or automotive parts under the bonnet. Housings for electronics and electrical appliances may also be made by injection moulding. Extrusion is widely used to produce articles such rods, sheets and pipes. The article may have a wall thickness of e.g. 0.1 to 10 mm.

Accordingly, the present invention further relates to a molded article comprising the glass fiber-reinforced thermoplastic polymer composition or the pellets according to the invention, wherein the article is selected from automotive exterior parts like bumpers and tailgates, automotive interior parts like instrument panels, automotive parts under the bonnet and housings for electronics and electrical appliances.

The present invention further relates to a process for making a molded article by molding the glass fiber-reinforced thermoplastic polymer composition or the pellets according to the invention, wherein the article is selected from automotive exterior parts like bumpers and tailgates, automotive interior parts like instrument panels, automotive parts under the bonnet and housings for electronics and electrical appliances.

The present invention further relates to use of at least one of an aromatic phosphate ester, polyphosphonate, poly(phosphonate-co-carbonate) as an impregnating agent for preparing a glass fiber-reinforced thermoplastic polymer composition comprising a sheathed continuous multifilament strand comprising a core that extends in the longitudinal direction and a polymer sheath which intimately surrounds said core, wherein the core comprises an impregnated continuous multifilament strand comprising at least one continuous glass multifilament strand, wherein the at least one continuous glass multifilament strand is impregnated with the impregnating agent, wherein the polymer sheath consists of a thermoplastic polymer composition comprising a thermoplastic polymer.

The invention is now elucidated by way of the following examples.

Examples

Materials used

PP1: Braskem F1000HC2 Polypropylene homopolymer with following properties: density: 905 kg/m³, melt flow index: 120 dg/min at 230°C and 2.16kg (test method: ISO1133), melting point: 160-175°C.

PP2: SABIC PP 595A Polypropylene homopolymer with following properties: density: 905 kg/m³, melt flow index: 45 dg/min at 230°C and 2.16kg (test method: ISO1133), melting point: 160-175°C.

Coupling agent 1: Exxelor PO1020 powder (PP-g-MA) from ExxonMobil: density: 900 kg/m³, melting point: 162°C, melt flow index: 430 dg/min at 230°C and 2.16kg (testing method: ASTM D1238)

GF: a glass roving having a diameter of 19 micron and a tex of 3000 (tex means grams glass per 1000m) containing a sizing composition comprising a silane coupling agent

Impregnating agent 1: wax commercially available as IGI Paraflex 4838A

Impregnating agent 2: ADEKA FP-600 bisphenol A bis(diphenyl phosphate) having a viscosity as determined in accordance with ASTM D445 at 23 °C of higher than 10000 mPa.s and at 80 °C of between 50 to 200 mPa.s

AO1076: antioxidant 1076 from BASF

AOB225: antioxidant B225 from BASF

UV119: UV stabilizer UV 119 from SABO SpA

UV770: UV stabilizer UV 770 from BASF

CMB: color masterbatch from Ampacet

Preparation of sheathed continuous multifilament strands (wire-coating)

Sheathed continuous multifilament strands were prepared using components given in Table 1 using the wire coating process as described in details in the examples of WO2009/080281A1.

The impregnating agent 1 or 2 was applied to GF to obtain an impregnated continuous glass multifilament strand.

Polypropylene, coupling agent and other additives shown in table 1 were fed to the extruder to sheath the impregnated continuous glass multifilament strand using an extruder-head wire-coating die. The sheathing step was performed in-line directly after the impregnating step. The obtained sheathed continuous multifilament strand was cut into pellets having length of 8-15 mm and diameter of 3-4 mm. The obtained pellets were molded using ARBURG 320T injection molding machine to prepare the samples for testing.

Following properties were measured and are shown in Table 1.

Ash content was tested according to ISO3451 at 800 °C for 30 min.

White spot (WS) was observed on a 510*310*2mm molded part at room temperature. The average numbers of the observed white spots of 20 molded parts are shown in Table 1.

Charpy notched impact was tested after 7 days at 23 °C aging according to ISO179. Flexural performance was tested after 7 days at 23 °C aging according to ISO178. Tensile performance was tested after 7 days at 23 °C aging according to ISO527. FOG value was determined according to VDA 278

Table 1

|  |  | CEx 1 | CEx 2 | Ex 3 | CEx 4 | Ex 5 |
|---|---|---|---|---|---|---|
| PP1 | wt% |  | 54.84 | 54.84 | 52.84 | 52.84 |
| PP2 | wt% | 52.84 |  |  |  |  |
| Impreg. Ag 1 | wt% | 4 | 2 |  | 4 |  |
| Impreg. Ag 2 | wt% |  |  | 2 |  | 4 |
| GF | wt% | 40.2 | 40.2 | 40.2 | 40.2 | 40.2 |
| AO 1076 | wt% | 0.2 | 0.2 | 0.2 | 0.2 | 0.2 |
| AO B225 | wt% | 0.2 | 0.2 | 0.2 | 0.2 | 0.2 |
| Coupling agent | wt% | 2 | 2 | 2 | 2 | 2 |
| UV 119 | wt% | 0.06 | 0.06 | 0.06 | 0.06 | 0.06 |
| UV 770 | wt% | 0.2 | 0.2 | 0.2 | 0.2 | 0.2 |
| CMB | wt% | 0.3 | 0.3 | 0.3 | 0.3 | 0.3 |
| Total | wt% | 100.00 | 100.00 | 100.00 | 100.00 | 100.00 |
| WS count visual |  | 3.4 | >25 | >25 | 1.9 | 1.1 |
| Ash content | % | 39.94 | 40.61 | 41.2 | 40.42 | 41.05 |
| Charpy impact | kJ/m$^2$ | 20.05 | 19.78 | 20.28 | 19.93 | 20.34 |
| Flexural modulus | MPa | 8404 | 9558 | 9574 | 8970 | 9348 |
| Flexural stress at break | MPa | 172.7 | 189.1 | 189.8 | 179.4 | 185.5 |
| Flexural strength | MPa | 182.2 | 201 | 198.5 | 188.6 | 194.5 |
| Tensile modulus | MPa | 8773.7 | 9831 | 10242 | 9583.1 | 10066.6 |
| Tensile strength | MPa | 109.4 | 120.2 | 122.6 | 117.2 | 119.2 |
| FOG | µg/g | 495 | 531 | 455 | 542 | 453 |

Comparison of CEx 2 vs Ex 3 and CEx 4 vs Ex 5 shows that the use of impregnating agent 2 according to the invention results in higher tensile properties (tensile modulus and tensile strength) and a lower FOG value than the use of impregnating agent 1. Further, the impact strength and the flexural properties are maintained at similar levels between the use of impregnating agents 1 and 2.

Further, comparison of Ex 3 vs Ex 5 shows that the higher amount of the impregnating agent 2 results in a substantially less number of white spots.

**Claims**

1. A glass fiber-reinforced thermoplastic polymer composition comprising a sheathed continuous multifilament strand comprising a core that extends in the longitudinal direction and a polymer sheath which intimately surrounds said core,

   wherein the core comprises an impregnated continuous multifilament strand comprising at least one continuous glass multifilament strand, wherein the at least one continuous glass multifilament strand is impregnated with an impregnating agent,
   wherein the polymer sheath consists of a thermoplastic polymer composition comprising a thermoplastic polymer,
   wherein the impregnating agent comprises at least one of an aromatic phosphate ester, polyphosphonate, poly(phosphonate-co-carbonate).

2. The glass fiber-reinforced thermoplastic polymer composition according to claim 1, wherein the impregnating agent comprises the aromatic phosphate ester.

3. The glass fiber-reinforced thermoplastic polymer composition according to claim 2, wherein the aromatic phosphate ester is selected from the group consisting of resorcinol bis(diphenyl phosphate);

   tetraphenyl resorcinol bis(diphenylphosphate);
   bisphenol A bis(diphenyl phosphate);
   bisphenol A diphosphate;
   resorcinol bis(di-2,6-xylyl phosphate),
   phosphoric acid, mixed esters with [1,1'-biphenyl]-4-4'-diol and phenol;
   phosphorictrichloride, polymer with 1,3-benzenediol,phenylester;
   1,3-phenylene-tetrakis(2,6-dimethylphenyl)diphosphate;
   isopropenylphenyl diphenyl phosphate;
   4-phenylphenolformaldehyde phenylphosphonate;
   tris(2,6-xylyl) phosphate;
   resorcinol bis(di-2,6-xylyl phosphate);
   bisphenol S bis(diphenyl phosphate); and
   resorcinol-bisphenol A phenyl phosphates and
   combinations thereof,
   preferably the aromatic phosphate ester is bisphenol A bis(diphenyl phosphate).

4. The glass fiber-reinforced thermoplastic polymer composition according to any one of the preceding claims, wherein the amount of the impregnating agent or the aromatic phosphate ester with respect to the sheathed continuous multifilament strand is 1.5 to 5.0 wt%.

5. The glass fiber-reinforced thermoplastic polymer composition according to any one of the preceding claims, wherein the amount of the impregnating agent or the aromatic phosphate ester with respect to the sheathed continuous multifilament strand is 2.5 to 5.0 wt%.

6. The glass fiber-reinforced thermoplastic polymer composition according to any one of the preceding claims, wherein the thermoplastic polymer has a melt flow index in the range from 20 to 150 dg/min, for example in the range from 30 to 140 dg/min as measured according to ISO1133-1:2011 (2.16kg/230°C).

7. The glass fiber-reinforced thermoplastic polymer composition according to any one of the preceding claims, wherein the thermoplastic polymer has a melt flow index in the range from 50 to 130 dg/min as measured according to ISO1133-1:2011 (2.16kg/230°C).

8. The glass fiber-reinforced thermoplastic polymer composition according to any one of the preceding claims, wherein the amount of the thermoplastic polymer with respect to the thermoplastic polymer composition is at least 80 wt%, for example at least 90wt%, at least 93wt%, at least 95wt%, at least 97wt% at least 98wt% or at least 99wt%.

9. The glass fiber-reinforced thermoplastic polymer composition according to any one of the preceding claims, wherein the thermoplastic polymer is a polyolefin, preferably wherein the polyolefin is chosen from the group of polypropylenes or elastomers of ethylene and $\alpha$-olefin comonomer having 4 to 8 carbon atoms, and any mixtures thereof.

10. The glass fiber-reinforced thermoplastic polymer composition according to any one of the preceding claims, wherein the thermoplastic polymer composition of the polymer sheath comprises a maleic acid functionalized propylene homopolymer.

11. The glass fiber-reinforced thermoplastic polymer composition according to any one of the preceding claims, wherein the amount of the impregnated continuous multifilament strand is 10 to 70 wt%, for example 15 to 60 wt%, 20 to 50 wt% or 25 to 45 wt%, with respect to the sheathed continuous multifilament strand.

12. Pellets comprising the glass fiber-reinforced thermoplastic polymer composition according to any one of the preceding claims.

13. A process for preparing the glass fiber-reinforced thermoplastic polymer composition according to any one of claims 1-11, comprising the sequential steps of:

a) unwinding from a package of the at least one continuous glass multifilament strand,
b) applying the impregnating agent to the at least one continuous glass multifilament strand to form the impregnated continuous multifilament strand and
c) applying the sheath of the thermoplastic polymer composition around the impregnated continuous multifilament strand to form the sheathed continuous multifilament strand and

optionally d) cutting the sheathed continuous glass multifilament strand into pellets.

14. A molded article comprising the glass fiber-reinforced thermoplastic polymer composition according to any one of claims 1-11 or the pellets of claim 12.

15. Use of an aromatic phosphate ester as an impregnating agent for preparing a glass fiber-reinforced thermoplastic polymer composition comprising a sheathed continuous multifilament strand comprising a core that extends in the longitudinal direction and a polymer sheath which intimately surrounds said core,

wherein the core comprises an impregnated continuous multifilament strand comprising at least one continuous glass multifilament strand, wherein the at least one continuous glass multifilament strand is impregnated with the impregnating agent,
wherein the polymer sheath consists of a thermoplastic polymer composition comprising a thermoplastic polymer.

**Patentansprüche**

1. Glasfaserverstärkte thermoplastische Polymerzusammensetzung, umfassend einen ummantelten, durchgehenden Multifilamentstrang, der einen Kern umfasst, der sich in Längsrichtung erstreckt, und eine Polymerhülle, die den Kern eng umschließt,

wobei der Kern einen imprägnierten, durchgehenden Multifilamentstrang umfasst, der mindestens einen durchgehenden Glasmultifilamentstrang umfasst, wobei der mindestens eine durchgehende Glasmultifilamentstrang mit einem Imprägniermittel imprägniert ist,
wobei die Polymerhülle aus einer thermoplastischen Polymerzusammensetzung besteht, die ein thermoplastisches Polymer umfasst,
wobei das Imprägniermittel mindestens eines von einem aromatischen Phosphatester, einem Polyphosphonat, einem Poly(phosphonat-co-carbonat) umfasst.

2. Glasfaserverstärkte thermoplastische Polymerzusammensetzung nach Anspruch 1, wobei das Imprägniermittel den aromatischen Phosphatester umfasst.

3. Glasfaserverstärkte thermoplastische Polymerzusammensetzung nach Anspruch 2, wobei der aromatische Phosphatester aus der Gruppe ausgewählt ist, bestehend aus Resorcin-bis(diphenylphosphat);

Tetraphenylresorcin-bis(diphenylphosphat);
Bisphenol A bis(diphenylphosphat);

Bisphenol-A-Diphosphat;
Resorcin-bis(di-2,6-xylylphosphat),
Phosphorsäure, gemischten Estern mit [1,1'-biphenyl]-4-4'-diol und Phenol;
Phosphortrichlorid, Polymer mit 1,3-Benzoldiol, Phenylester;
1,3-Phenylen-tetrakis(2,6-dimethylphenyl)diphosphat;
Isopropenylphenyldiphenylphosphat;
4-Phenylphenolformaldehyd-Phenylphosphonat;
Tris(2,6-xylyl)phosphat;
Resorcin-bis(di-2,6-xylylphosphat);
Bisphenol S bis(diphenylphosphat); und
Resorcin-Bisphenol-A-Phenylphosphate und
Kombinationen davon,
das aromatische Phosphatester vorzugsweise Bisphenol A bis(diphenylphosphat) ist.

4. Glasfaserverstärkte thermoplastische Polymerzusammensetzung nach einem der vorstehenden Ansprüche, wobei die Menge des Imprägniermittels oder des aromatischen Phosphatesters bezogen auf den ummantelten, durchgehenden Multifilamentstrang 1,5 bis 5,0 Gew.-% beträgt.

5. Glasfaserverstärkte thermoplastische Polymerzusammensetzung nach einem der vorstehenden Ansprüche, wobei die Menge des Imprägniermittels oder des aromatischen Phosphatesters bezogen auf den ummantelten, durchgehenden Multifilamentstrang 2,5 bis 5,0 Gew.-% beträgt.

6. Glasfaserverstärkte thermoplastische Polymerzusammensetzung nach einem der vorstehenden Ansprüche, wobei das thermoplastische Polymer einen Schmelzflussindex im Bereich von 20 bis 150 dg/min, zum Beispiel im Bereich von 30 bis 140 dg/min gemessen nach ISO1133-1:2011 (2,16 kg/230 °C) aufweist.

7. Glasfaserverstärkte thermoplastische Polymerzusammensetzung nach einem der vorstehenden Ansprüche, wobei das thermoplastische Polymer einen Schmelzflussindex im Bereich von 50 bis 130 dg/min gemessen nach ISO1133-1:2011 (2,16 kg/230 °C) aufweist.

8. Glasfaserverstärkte thermoplastische Polymerzusammensetzung nach einem der vorstehenden Ansprüche, wobei die Menge des thermoplastischen Polymers bezogen auf die thermoplastische Polymerzusammensetzung mindestens 80 Gew.-%, zum Beispiel mindestens 90 Gew.-%, mindestens 93 Gew.-%, mindestens 95 Gew.-%, mindestens 97 Gew.-% mindestens 98 Gew.-% oder mindestens 99 Gew.-% beträgt.

9. Glasfaserverstärkte thermoplastische Polymerzusammensetzung nach einem der vorstehenden Ansprüche, wobei das thermoplastische Polymer ein Polyolefin ist, wobei das Polyolefin vorzugsweise aus der Gruppe von Polypropylenen oder Elastomeren aus Ethylen und $\alpha$-Olefin-Comonomeren, die 4 bis 8 Kohlenstoffatome aufweisen, und beliebigen Mischungen davon ausgewählt ist.

10. Glasfaserverstärkte thermoplastische Polymerzusammensetzung nach einem der vorstehenden Ansprüche, wobei die thermoplastische Polymerzusammensetzung der Polymerhülle ein mit Maleinsäure funktionalisiertes Propylenhomopolymer umfasst.

11. Glasfaserverstärkte thermoplastische Polymerzusammensetzung nach einem der vorstehenden Ansprüche, wobei die Menge des imprägnierten, endlosen Multifilamentstrangs 10 bis 70 Gew.-%, zum Beispiel 15 bis 60 Gew.-%, 20 bis 50 Gew.-% oder 25 bis 45 Gew.-%, bezogen auf den ummantelten, durchgehenden Multifilamentstrang beträgt.

12. Pellets, welche die glasfaserverstärkte thermoplastische Polymerzusammensetzung nach einem der vorstehenden Ansprüche umfassen.

13. Prozess zur Herstellung der glasfaserverstärkten thermoplastischen Polymerzusammensetzung nach einem der Ansprüche 1-11, umfassend die aufeinanderfolgenden Schritte zum:

a) Abwickeln von einem Paket des mindestens einen durchgehenden Glasmultifilamentstrangs,
b) Aufbringen des Imprägniermittels auf den mindestens einen durchgehenden Glasmultifilamentstrang, um den imprägnierten durchgehenden Multifilamentstrang zu bilden;
c) Aufbringen der Hülle aus der thermoplastischen Polymerzusammensetzung um den imprägnierten durchgehenden Multifilamentstrang, um den ummantelten durchgehenden Multifilamentstrang zu bilden, und

optional d) Schneiden des ummantelten, durchgehenden Glasmultifilamentstrangs in Pellets.

14. Formteil, umfassend die glasfaserverstärkte thermoplastischen Polymerzusammensetzung nach einem der Ansprüche 1-11 oder die Pellets nach Anspruch 12.

15. Verwendung eines aromatischen Phosphatesters als Imprägniermittel zur Herstellung einer glasfaserverstärkten thermoplastischen Polymerzusammensetzung, umfassend einen ummantelten, durchgehenden Multifilamentstrang, der einen Kern umfasst, der sich in Längsrichtung erstreckt, und eine Polymerhülle, die den Kern eng umschließt,

wobei der Kern einen imprägnierten, durchgehenden Multifilamentstrang umfasst, der mindestens einen durchgehenden Glasmultifilamentstrang umfasst, wobei der mindestens eine durchgehende Glasmultifilamentstrang mit dem Imprägniermittel imprägniert ist,
wobei die Polymerhülle aus einer thermoplastischen Polymerzusammensetzung besteht, die ein thermoplastisches Polymer umfasst.

**Revendications**

1. Composition polymère thermoplastique renforcée en fibres de verre comprenant un brin multifilamentaire continu gainé, constitué d'un noyau s'étendant dans le sens longitudinal et d'une gaine polymère entourant intimement ledit noyau,

dans lequel le noyau comprend un brin multifilamentaire continu imprégné comprenant au moins un brin multifilamentaire continu en verre, dans lequel le brin multifilamentaire continu en verre est imprégné d'un agent d'imprégnation,
dans lequel la gaine polymère est constituée d'une composition polymère thermoplastique comprenant un polymère thermoplastique,
dans lequel l'agent d'imprégnation comprend au moins un élément parmi un ester de phosphate aromatique, un polyphosphonate, un poly(phosphonate-co-carbonate).

2. Composition polymère thermoplastique renforcée en fibres de verre selon la revendication 1, dans laquelle l'agent d'imprégnation comprend l'ester de phosphate aromatique.

3. Composition polymère thermoplastique renforcée en fibres de verre selon la revendication 2, dans laquelle l'ester de phosphate aromatique est choisi dans le groupe constitué de bis(diphénylphosphate) de résorcinol ;

de tétraphényl résorcinol bis(diphénylphosphate) ;
de bisphénol A bis(diphényl phosphate) ;
de bisphénol A diphosphate ;
de bis(di-2,6-xylyl phosphate) de résorcinol,
d'acide phosphorique, d'esters mixtes avec du [1,1'-biphényl]-4-4'-diol et du phénol ;
du trichlorure de phosphoryle, un polymère avec du 1,3-benzènediol, un ester phénylique ;
du 1,3-phénylène-tétrakis(2,6-diméthylphényl)diphosphate ;
du phosphate d'isopropénylphényl diphényle ;
du 4-phénylphénolformaldéhyde phénylphosphonate ;
du phosphate de tris(2,6-xylyl) ;
du bis(di-2,6-xylyl phosphate) de résorcinol ;
du bisphénol S bis(diphényl phosphate) ; et
des phosphates de résorcinol-bisphénol A et
des combinaisons de ceux-ci,
de préférence l'ester de phosphate aromatique est le bisphénol A bis(diphényl phosphate).

4. Composition polymère thermoplastique renforcée en fibres de verre selon l'une quelconque des revendications précédentes, dans laquelle la quantité d'agent d'imprégnation ou d'ester de phosphate aromatique par rapport au brin multifilamentaire continu gainé est de 1,5 à 5,0 % en poids.

**5.** Composition polymère thermoplastique renforcée en fibres de verre selon l'une quelconque des revendications précédentes, dans laquelle la quantité d'agent d'imprégnation ou d'ester de phosphate aromatique par rapport au brin multifilamentaire continu gainé est de 2,5 à 5,0 % en poids.

**6.** Composition de polymère thermoplastique renforcée en fibres de verre selon l'une quelconque des revendications précédentes, dans laquelle le polymère thermoplastique présente un indice de fluidité à l'état fondu compris entre 20 et 150 dg/min, par exemple dans la plage de 30 à 140 dg/min tel que mesuré selon la norme ISO1133-1:2011 (2,16 kg/230 °C).

**7.** Composition de polymère thermoplastique renforcée en fibres de verre selon l'une quelconque des revendications précédentes, dans laquelle le polymère thermoplastique présente un indice de fluidité à l'état fondu compris entre 50 et 130 dg/min tel que mesuré selon la norme ISO1133-1:2011 (2,16 kg/230 °C).

**8.** Composition de polymère thermoplastique renforcée en fibres de verre selon l'une quelconque des revendications précédentes, dans laquelle la quantité de polymère thermoplastique par rapport à la composition de polymère thermoplastique est d'au moins 80 % en poids, par exemple au moins 90 % en poids, au moins 93 % en poids, au moins 95 % en poids, au moins 97 % en poids, au moins 98 % en poids ou au moins 99 % en poids.

**9.** Composition de polymère thermoplastique renforcée en fibres de verre selon l'une quelconque des revendications précédentes, dans laquelle le polymère thermoplastique est une polyoléfine, de préférence dans laquelle la polyoléfine est choisie dans le groupe de polypropylènes ou d'élastomères d'éthylène et de co-monomère $\alpha$-oléfine présentant de 4 à 8 atomes de carbone, et leurs mélanges.

**10.** Composition polymère thermoplastique renforcée en fibres de verre selon l'une quelconque des revendications précédentes, dans laquelle la composition polymère thermoplastique de la gaine polymère comprend un homopolymère de propylène fonctionnalisé à l'acide maléique.

**11.** Composition polymère thermoplastique renforcée en fibres de verre selon l'une quelconque des revendications précédentes, dans laquelle la quantité de brin multifilamentaire continu imprégné est de 10 à 70 % en poids, par exemple de 15 à 60 % en poids, de 20 à 50 % en poids ou de 25 à 45 % en poids, en ce qui concerne le brin multifilamentaire continu gainé.

**12.** Granulés comprenant la composition polymère thermoplastique renforcée en fibres de verre selon l'une quelconque des revendications précédentes.

**13.** Procédé de préparation d'une composition polymère thermoplastique renforcée en fibres de verre selon l'une quelconque des revendications 1-11, comprenant les étapes séquentielles de :

a) déroulement du au moins un brin multifilamentaire de verre continu à partir d'un paquet,
b) application de l'agent d'imprégnation audit au moins un brin multifilamentaire de verre continu pour former un brin multifilamentaire continu imprégné ;
c) application de la gaine de la composition polymère thermoplastique autour du brin multifilamentaire continu imprégné pour former le brin multifilamentaire continu gainé et

éventuellement d) découpe du brin multifilamentaire en verre continu gainé en granulés.

**14.** Article moulé comprenant la composition de polymère thermoplastique renforcée en fibres de verre selon l'une quelconque des revendications 1-11 ou les granulés selon la revendication 12.

**15.** Utilisation d'un ester de phosphate aromatique comme agent d'imprégnation pour la préparation d'une composition polymère thermoplastique renforcée en fibres de verre comprenant un brin multifilamentaire continu gainé comportant un noyau s'étendant dans le sens longitudinal et une gaine polymère entourant intimement ledit noyau,

dans lequel le noyau comprend un brin multifilamentaire continu imprégné comprenant au moins un brin multifilamentaire continu en verre, dans lequel l'au moins un brin multifilamentaire continu en verre est imprégné de l'agent d'imprégnation,
dans lequel la gaine polymère est constituée d'une composition polymère thermoplastique comprenant un polymère thermoplastique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2009080281 A
- WO 2009080281 A1
- US 6291064 B
- WO 06010414 A
- US 4399054 A
- US 4472524 A
- US 5017714 A
- US 5324820 A
- WO 2015062825 A
- EP 0921919 B1
- EP 0994978 B1
- EP 0397505 B1
- WO 2014053590 A1

### Non-patent literature cited in the description

- Polymerization, Characterization, Properties, Processing, Applications. **MOORE, E. P**. Polypropylene Handbook. Hanser Publishers, 1996
- Polypropylene and other Polyolefins. **SER VAN DER VEN**. Studies in Polymer Science. Elsevier, 1990, vol. 7